# EUROPÄISCHE PATENTSCHRIFT

(11) **EP 1 342 054 B1**
(45) Veröffentlichungstag und Bekanntmachung des Hinweises auf die Patenterteilung: **11.09.2013**
(21) Anmeldenummer: 01956347.7
(22) Anmeldetag: 20.07.2001
(51) Int. Cl.: G01C 21/36

(54) **VERFAHREN ZUR STEUERUNG EINER SPRACHEINGABE UND -AUSGABE**
METHOD FOR CONTROLLING A VOICE INPUT AND OUTPUT
PROCEDE DE COMMANDE D'ENTREE ET DE SORTIE VOCALE

(30) Priorität: 18.08.2000 DE 10040466
(43) Veröffentlichungstag der Anmeldung: 10.09.2003
(73) Patentinhaber: ROBERT BOSCH GMBH, 70442 Stuttgart (DE)
(72) Erfinder: WOESTEMEYER, Stefan, 31135 Hildesheim (DE); WALL, Holger, 31134 Hildesheim (DE)
(86) Internationale Anmeldenummer: PCT/DE2001/002743
(87) Internationale Veröffentlichungsnummer: WO 2002/014789

(56) Entgegenhaltungen:
- DE-A- 4 300 927
- DE-A- 19 704 916
- DE-A- 19 843 565
- US-A- 4 528 687
- US-A- 4 593 403

## Beschreibung

### Stand der Technik

Die Erfindung geht aus von einem Verfahren zur Steuerung einer Spracheingabe und -ausgabe nach der Gattung des Hauptanspruchs. Aus der WO 96/27842 ist ein Navigationssystem bekannt, bei dem ein Benutzer durch das Navigationssystem zum Beispiel zur Eingabe eines Fahrziels aufgefordert wird. Eine Aufforderung zur Eingabe wird durch das Navigationssystem in Sprachform über Lautsprecher ausgegeben. Ein Benutzer des Navigationssystems antwortet, wobei die Antworten mittels einer Spracherkennung ausgewertet werden. Damit ein Benutzer antworten kann, muss jedoch die von dem Navigationssystem gestellte Frage abgewartet werden. Hierbei muss ein Benutzer die gesamte Ausgabe der Frage abwarten, selbst wenn ihm bereits nach wenigen Worten der Frage klar ist, welche Eingabe von ihm erwartet wird, da keine Möglichkeit gegeben wird, die gestellte Frage frühzeitig abzubrechen und eine Eingabe vorzunehmen. Insbesondere dann, wenn ein Benutzer bereits Erfahrungen mit dem Navigationssystem gesammelt hat, wird hierdurch die Dauer der Eingabe eines Fahrziels unnötig verlängert, so dass eine Bereitschaft des Benutzers abnimmt, das Navigationssystem zu benutzen, beziehungsweise dass ein Benutzer im Straßenverkehr durch lange Fragesätze des Navigationssystems, die er nicht abbrechen kann, gestört und abgelenkt wird.

Aus der DE 198 43 565 Al ist ein mobiles Funkempfangsgerät mit einem Navigationsrechner bekannt, bei dem eine Ansage eines Standortes in Form eines Straßennamens oder einer sonstigen Ortsbezeichnung erfolgen kann. Ferner ist ein Bedienelement vorgesehen, bei dessen Betätigung die akustische Ansage der Ortsangabe wiederholt wird.

Aus der US 4,593,403 ist ein Spracherkennungssystem für ein Kraftfahrzeugsystem bekannt, bei dem über die Betätigung des Bedienelementes einer Spracheeingabe für eine spätere Wiedererkennung aufgezeichnet wird.

### Vorteile der Erfindung

Das erfindungsgemäße Verfahren mit den Merkmalen des Hauptanspruchs hat demgegenüber den Vorteil, dass ein Benutzer eine Sprachausgabe jederzeit unterbrechen und im Anschluss direkt eine Spracheingabe durchführen kann. Sobald einem Benutzer folglich klar ist, welche Eingabe von ihm erwartet wird, kann er mittels einer Benutzereingabe reagieren und eine Spracheingabe vornehmen. Hierdurch wird die Benutzerakzeptanz einer Spracheingabe und -ausgabe erhöht. Die Zeit, die für einen Dialog zwischen einer Spracheingabe und -ausgabeeinheit und einem Benutzer benötigt wird, wird vor allem dann stark reduziert, wenn der Benutzer bereits Erfahrungen mit der Benutzung der Spracheingabe und -ausgabeeinheit hat.

Durch die in den Unteransprüchen aufgeführten Maßnahmen sind vorteilhafte Weiterbildungen und Verbesserungen des im Hauptanspruch angegebenen Verfahrens möglich. Besonders vorteilhaft ist, dass während der Sprachausgabe ein Mikrofon aktiviert wird, so dass die Sprachausgabe dann unterbrochen wird, wenn ein von einem Benutzer gesprochenes Wort erfasst wird. Indem eine Benutzereingabe somit durch ein gesprochenes Wort realisiert wird, kann ein Benutzer mit einem gesprochenen Wort bereits seine Spracheingabe beginnen während die Sprachausgabe noch Wörter ausgibt. Eine Betätigung eines Bedienelements ist hierbei nicht erforderlich, so dass zum Beispiel ein Fahrer eines Fahrzeugs in der Steuerung des Fahrzeugs nicht beeinträchtigt wird.

Weiterhin ist vorteilhaft, die Sprachausgabe nur durch ein bestimmtes Wort zu unterbrechen, da hierdurch das erfindungsgemäße Verfahren auch verwendet werden kann, wenn im Bereich des Mikrofons gesprochen wird, wenn zum Beispiel mehrere Personen in einem Fahrzeug sitzen und miteinander reden. Hierdurch wird vermieden, dass durch ein beliebiges, gesprochenes Wort bereits die Sprachausgabe unterbrochen und eine Spracheingabe aktiviert wird.

Weiterhin ist vorteilhaft, die Sprachausgabe durch einen Tastendruck zu unterbrechen. Dies ist insbesondere dann vorteilhaft, wenn ein Unterbrechen mittels eines gesprochenen Wortes zum Beispiel durch ein Störgeräusch erfolglos geblieben ist. Insbesondere ist hierbei vorteilhaft, dass die Spracheingabe und -ausgabe durch einen Tastendruck auch ganz deaktiviert werden kann und zum Beispiel auf eine Bedienung eines der Spracheingabe und - ausgabe zugeordneten Geräts mittels Bedienelementen umgeschaltet werden kann. Dies ist insbesondere dann vorteilhaft, wenn ein Benutzer der Spracheingabe und - ausgabe gerade telefoniert oder wenn laute Störgeräusche eine Benutzung einer Spracheingabe zu sehr beeinträchtigen. Eine Deaktivierung der Spracheingabe und -ausgabe wird dabei vorteilhaft zum Beispiel durch einen doppelten Tastendruck oder durch einen längeren Tastendruck erreicht.

Erfindungsgemäβ wird nach Abschluß der Spracheingabe die Sprachausgabe erneut aktiviert wird, so dass sich ein Dialog zwischen der Spracheingabe und -ausgabe sowie einem Benutzer entfalten kann. Hierbei ist insbesondere vorteilhaft, wenn der durch die Sprachausgabe ausgegebene Text eine Aufforderung zu einer nachfolgenden Spracheingabe beinhaltet, da so auch ein Benutzer, der die Spracheingabe und -ausgabeeinheit erstmalig benutzt, zu einer korrekten Benutzung angeleitet wird.

Ferner ist vorteilhaft, das erfindungsgemäße Verfahren zur Fahrzieleingabe in einer Navigationsvorrichtung in einem Kraftfahrzeug zu benutzen, da ein Fahrer eines Fahrzeugs sich stark auf den Straßenverkehr konzentrieren muss und durch eine zu lange Sprachausgabe unnötig abgelenkt wird. Ferner wird die Navigationsvorrichtung in einem Fahrzeug im Allgemeinen von einem Benutzer immer wieder benutzt, so dass einem Benutzer die ihm von der Navigationsvorrichtung mittels der Sprachausgabe gestellten Aufforderungen zur Fahrzieleingabe nach kurzer Zeit bereits gut bekannt sind.

### Zeichnung

Ausführungsbeispiele der Erfindung sind in der Zeichnung dargestellt und in der nachfolgenden Beschreibung näher erläutert. Es zeigen Figur 1 eine Navigationsvorrichtung in einem Kraftfahrzeug mit einer erfindungsgemäßen Spracheingabe und -ausgabe, Figur 2 ein Ablauf eines erfindungsgemäßen Verfahrens zur Steuerung einer Spracheingabe und -ausgabe und Figur 3 einen zweiten Verfahrensablauf eines erfindungsgemäßen Verfahrens zur Steuerung einer Spracheingabe und -ausgabe.

### Beschreibung des Ausführungsbeispiels

Das erfindungsgemäße Verfahren zur Steuerung einer Spracheingabe und -ausgabe kann an allen Schnittstellen zwischen einem Menschen und einer Maschine eingesetzt werden, an denen eine Sprachausgabe durch die Maschine und eine Spracheingabe durch den Menschen erfolgt. Besonders vorteilhaft ist ein solches Verfahren bei Schnittstellen zwischen einem Menschen und einer Maschine, bei der ein Mensch eine Aufforderung zu einer Spracheingabe nicht ablesen kann, da er sich bei der Steuerung eines Fahrzeugs, eines Flugzeugs oder einer sonstigen Maschine auf ein Verkehrsgeschehen, auf Betriebsparameter des Fahrzeugs oder einen Betriebsablauf der Maschine konzentrieren muss. Ferner kann Menschen mit einer reduzierten Sehleistung ein Dialog mit einem elektronischen Gerät, z.B. einem Haushaltsgerät, mit der erfindungsgemäßen Spracheingabe und -ausgabe erleichtert werden. Außerdem ist das Verfahren zur Fernsteuerung einer Recheneinheit mittels Telefon geeignet. Im Folgenden wird das erfindungsgemäße Verfahren anhand einer Steuerung einer Spracheingabe und -ausgabe beschrieben, die mit einer Navigationsvorrichtung in einem Kraftfahrzeug verbunden ist.

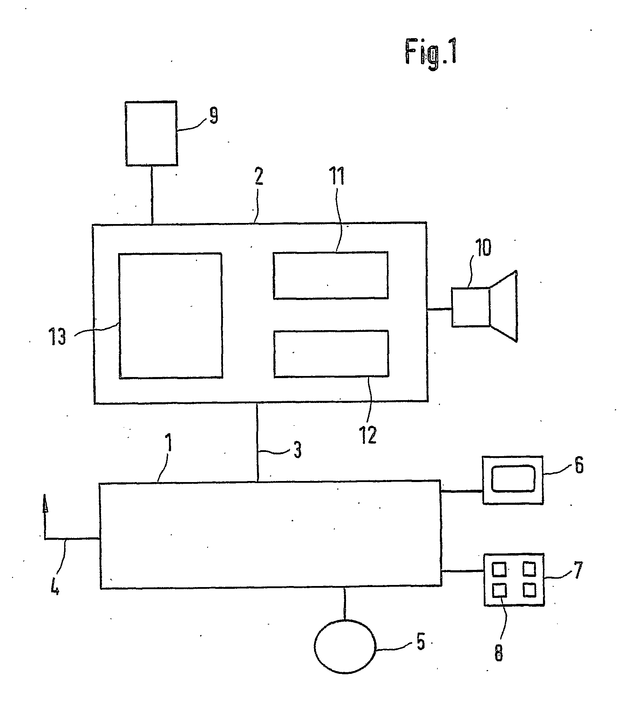

In Figur 1 ist eine Navigationsvorrichtung 1 in einem Kraftfahrzeug mit einer Spracheingabe und -ausgabeeinheit 2 über eine Datenverbindung 3 verbunden. Die Navigationsvorrichtung 1 ist ferner mit einem GPS-Empfänger 4, einem Datenspeicher 5, einer Anzeigeeinheit 6 und einer Eingabeeinheit 7 mit Tasten 8 verbunden. Die Spracheingabe und -ausgabeeinheit 2 ist mit einem Mikrofon 9 und einem Lautsprecher 10 verbunden. Die Spracheingabe und - ausgabeeinheit 2 verfügt ferner über eine Recheneinheit 11, eine Speichereinheit 12 und eine Filtereinheit 13.

Die in der Figur 1 nicht näher dargestellte Navigationsvorrichtung 1 dient dazu, eine Fahrtroute von einem Startpunkt zu einem Zielpunkt zu berechnen, eine Fahrtroute in der Anzeigeeinheit 6 anzuzeigen und Fahrhinweise mittels der Sprachausgabefunktion der Spracheingabe und -ausgabeeinheit 2 über den Lautsprecher 10 auszugeben. Eine Fahrtroute wird dabei durch Zugriff auf eine in dem Datenspeicher 5 abgelegte digitale Straßenkarte mit einem gespeicherten Straßen- und Wegenetz berechnet. Eine Startposition wird mittels einer Positionsbestimmung der Navigationsvorrichtung 1 durch den GPS-Empfänger 4 festgelegt (GPS = Global Positioning System). Die Eingabe eines Fahrziels kann über an der Eingabeeinheit 7 angeordnete Tasten 8 erfolgen, vorzugsweise durch eine in der Anzeigeeinheit 6 angezeigte Fahrzielauswahl. Erfindungsgemäß kann ferner ein Fahrziel mittels der Spracheingabe und -ausgabeeinheit 2 eingegeben werden. Hierbei wird durch die Spracheingabe und -ausgabeeinheit 2 neben Fahrhinweisen auch eine Aufforderung zur Eingabe eines Fahrziels ausgegeben. Eine Aufforderung, eine Sprachausgabe zu starten, wird von der Navigationsvorrichtung 1 über die Datenverbindung 3 an die Spracheingabe und -ausgabeeinheit 2 übermittelt. Die Recheneinheit 11 ermittelt die entsprechende Sprachausgabe und gibt Wörter über den Lautsprecher 10 aus, indem in der Speichereinheit 12 in digitaler Form gespeicherte Sprachbausteine zu Wörtern zusammengesetzt werden. Bei der Ausgabe eines Fahrhinweises ist eine Antwort eines Benutzers nicht erforderlich. Gibt ein Benutzer jedoch nach Aufforderung durch die Spracheingabe und -ausgabeeinheit 2 ein Fahrziel mittels Sprache ein, so werden von dem Benutzer gesprochenen Wörter über das Mikrofon 9 erfasst. Die Filtereinheit 13 filtert aus dem über das Mikrofon 9 erfassten Signal Störungen heraus, zum Beispiel Hintergrundgeräusche oder ein zeitgleich über den Lautsprecher 10 ausgegebenes Audiosignal. Von der Recheneinheit 11 wird das von der Filtereinheit 13 ausgegebene und über das Mikrofon 9 erfasste Signal analysiert und durch Zugriff auf die in der Speichereinheit 12 abgelegten Sprachbausteine wird eine Spracherkennung durchgeführt. Anhand der Spracherkennung wird das ermittelte Fahrziel über die Datenverbindung 3 an die Navigationsvorrichtung 1 weitergegeben. Für die Eingabe eines Fahrziels ist jedoch im Allgemeinen eine komplexe Eingabe erforderlich, zum Beispiel die Eingabe einer vollständigen Adresse. Damit jedoch eine Spracheingabe zu lange, so sinkt die Wahrscheinlichkeit einer erfolgreichen Spracherkennung ab. Deshalb werden in einem Dialog zwischen der Spracheingabe und -ausgabeeinheit 2 und einem Benutzer einzelne Merkmale des Fahrziels, zum Beispiel die Adressdaten Ort, Straße und Hausnummer einzeln abgefragt. Hierbei wird zum Beispiel von der Spracheingabe und - ausgabeeinheit über den Lautsprecher 10 die Frage ausgegeben: "In welcher Stadt liegt das Fahrziel?" Der Benutzer spricht nun eine Stadt in das Mikrofon 9, die mittels Spracherkennung durch die Recheneinheit 11 erkannt und an die Navigationsvorrichtung 1 übermittelt wird. In einem bevorzugten Ausführungsbeispiel wird anschließend die von der Spracheingabe und -ausgabeeinheit 2 verstandene Stadt zur Kontrolle über den Lautsprecher 10 ausgegeben. Wird der ausgegebene Städtename von einem Benutzer nicht korrigiert, so wird in einem nächsten Schritt die Frage ausgegeben: "In welcher Straße liegt das Fahrziel?" Es wird nun so lange ein Dialog zwischen der Spracheingabe und - ausgabeeinheit 2 und dem Benutzer durchgeführt, bis ein Fahrziel eindeutig bestimmt ist. Ein Dialog ist dabei nicht auf die Eingabe von Adressen beschränkt, sondern kann sich zum Beispiel auch auf die Suche nach einem Hotel, nach einer Gaststätte oder nach einer Sehenswürdigkeit beziehen. In einem weiteren, in der Figur 1 nicht dargestellten Ausführungsbeispiel ist es auch möglich, die Spracheingabe und -ausgabeeinheit 2 mit der Navigationsvorrichtung 1 in einem Gerät zusammenzufassen und/oder hierbei Recheneinheit 11 mit einer Recheneinheit der Navigationsvorrichtung 1 zu kombinieren.

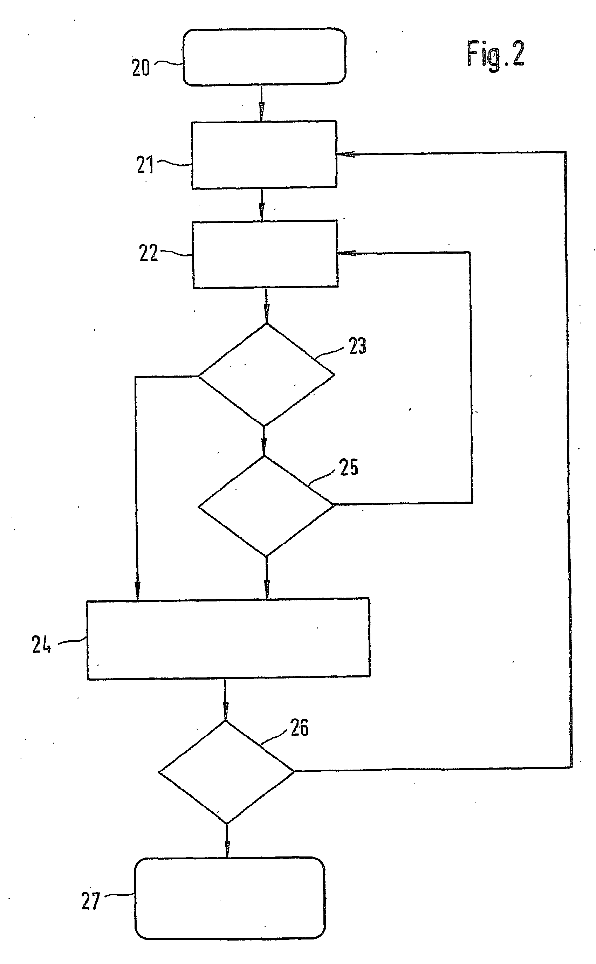

In der Figur 2 ist ein erstes erfindungsgemäßes Verfahren zur Steuerung der Spracheingabe und -ausgabeeinheit 2 dargestellt. In einem Initialisierungsschritt 20 wird die Spracheingabe und -ausgabe in der Spracheingabe und - ausgabeeinheit 2 von der Navigationsvorrichtung 1 aktiviert, indem zum Beispiel der Befehl übergeben wird, ein Fahrziel von einem Benutzer abzufragen. In einem anschließenden Ermittlungsschritt 21 wird eine Frage von der Spracheingabe und -ausgabeeinheit 2 festgelegt. Wird der Ermittlungsschritt 21 zum Beispiel das erste Mal erreicht, so wird ein Benutzer gefragt, welcher Art ein einzugebendes Fahrziel sein soll, zum Beispiel Adresse, Hotel oder Sehenswürdigkeit. Wird der Ermittlungsschritt 21 im weiteren Verfahren erneut erreicht, so werden Details des einzugebenden Fahrziels erfragt, zum Beispiel Straße, Hausnummer, Art des Hotels, Art der Sehenswürdigkeit. In einem an den Ermittlungsschritt 21 anschließenden Sprachausgabeschritt 22 wird eine erste Sequenz der auszugebenden Frage von der Recheneinheit 11 über den Lautsprecher 10 ausgegeben, zum Beispiel das erste Wort der Frage. Danach wird zu einem ersten Prüfschritt 23 weiterverzweigt. In dem ersten Prüfschritt 23 wird geprüft, ob von dem Mikrofon 9 ein von einem Benutzer der Spracheingabe und -ausgabeeinheit 2 gesprochenes Wort erfasst wurde. Ist dies der Fall, so wird zu einem Spracheingabeschritt 24 weiterverzweigt. In einem bevorzugten Ausführungsbeispiel wird von dem ersten Prüfschritt 23 nur dann zu dem Spracheingabeschritt 24, wenn ein vorgegebenes, von dem Benutzer gesprochenes Wort, zum Beispiel "Stopp", erfasst wurde. In dem Spracheingabeschritt 24 werden nachfolgende, von dem Benutzer gesprochene Wörter erfasst und von der Recheneinheit 11 ausgewertet. Wird in dem ersten Prüfschritt 23 festgestellt, dass von dem Mikrofon 9 kein gesprochenes Wort bzw. kein vorgegebenes gesprochenes Wort eines Benutzers aufgenommen wurde, so wird zu einem zweiten Prüfschritt 25 weiterverzweigt. In dem zweiten Prüfschritt 25 wird überprüft, ob die in dem Ermittlungsschritt 21 festgelegte Frage bereits vollständig ausgegeben wurde. Ist dies der Fall, so wird ebenfalls zu dem Spracheingabeschritt 24 weiterverzweigt. Ist dies nicht der Fall, so wird zu dem Sprachausgabeschritt 22 zurückverzweigt und es wird die nächste Sequenz der Frage, zum Beispiel das zweite Wort der Frage, ausgegeben. Der Spracheingabeschritt 24, der in der Figur 2 nicht näher dargestellt ist, wird zum Beispiel dann beendet, wenn von dem Mikrofon 9 keine weiteren gesprochenen Wörter oder Buchstaben erfasst werden. Anschließend wird zu einem dritten Prüfschritt 26 weiterverzweigt. In dem dritten Prüfschritt 26 wird überprüft, ob das Fahrziel bereits eindeutig bestimmt ist. Ist dies der Fall, so wird zu einem Endschritt 27 weiterverzweigt, in dem die Spracheingabe und -ausgabe beendet wird. Das ermittelte Fahrziel wird an die Navigationsvorrichtung 1 übermittelt und für eine Routensuche verwendet. Wird in dem dritten Prüfschritt 26 festgestellt, dass das Fahrziel noch nicht eindeutig bestimmt ist, so wird zu dem Ermittlungsschritt 21 zurückverzweigt und es wird eine neue Frage an den Benutzer ausgegeben, mit der weitere Details des Fahrziels abgefragt werden. In einem bevorzugten Ausführungsbeispiel wird zunächst gefragt, ob die in dem Spracheingabeschritt 24 eingegebene Sequenz korrekt eingegeben wurde. Ferner ist es auch möglich, das erste vor dem ersten Prüfschritt erfasste Wort als das erste Wort der Spracheingabe in dem Spracheingabeschritt 24 zu berücksichtigen.

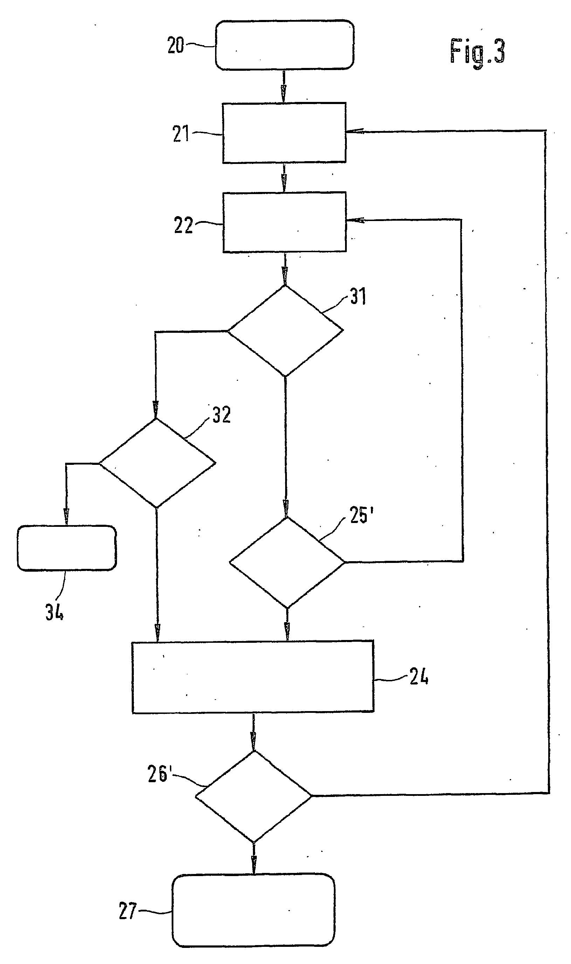

In der Figur 3 ist ein weiteres Ausführungsbeispiel zur erfindungsgemäßen Steuerung einer Spracheingabe und - ausgabeeinheit 2 dargestellt. Das Verfahren beginnt mit einem Initialisierungsschritt 20, an den sich ein Ermittlungsschritt 21 und ein Sprachausgabeschritt 22 anschließen, die den anhand der Figur 2 erläuterten, gleichnamigen Schritten entsprechen. Bei dem Verfahren gemäß der Figur 3 schließt an den Sprachausgabeschritt 22 ein erster Prüfschritt 31 an, in dem überprüft wird, ob seit dem letzten Erreichen des ersten Prüfschrittes 31 beziehungsweise bei einem ersten Erreichen des ersten Prüfschrittes 31 seit dem Initialisierungsschritt 20, eine Taste 8 der Eingabeeinheit 7 gedrückt wurde. Wird in dem ersten Prüfschritt 31 ein Tastendruck festgestellt, so wird zu einem zweiten Prüfschritt 32 verzweigt, in dem in einem ersten Ausführungsbeispiel überprüft wird, ob die Taste 8 zweimal gedrückt wurde. Ist dies der Fall, so wird zu einem Endschritt 34 weiterverzweigt, in dem die Spracheingabe und -ausgabe beendet wird. Eine Fahrzieleingabe erfolgt nun über die an der Eingabeeinheit 7 angeordneten Tasten 8. Wird in dem zweiten Prüfschritt 32 kein zweimaliger Tastendruck festgestellt, so wird zu dem Spracheingabeschritt 24 verzweigt, der dem Spracheingabeschritt 24 gemäß der Figur 2 entspricht. In einem weiteren Ausführungsbeispiel wird von dem zweiten Prüfschritt 32 dann zu dem Endschritt 34 weiterverzweigt, wenn eine Taste 8 länger als ein vorgegebener Zeitraum gedrückt wurde, zum Beispiel länger als zwei Sekunden. Wird in dem ersten Prüfschritt 31 kein Tastendruck festgestellt, so wird zu einem dritten Prüfschritt 25' verzweigt, der inhaltlich dem zweiten Prüfschritt 25 gemäß der Figur 2 entspricht. An den Spracheingabeschritt 24 schließt ein vierter Prüfschritt 26' an, der dem dritten Prüfschritt 26 gemäß der Figur 2 entspricht. Der Endschritt 27 entspricht ebenfalls dem Endschritt 27 gemäß der Figur 2.

## Patentansprüche

1. Verfahren zur Steuerung einer Spracheingabe und -ausgabe in einem Navigationssystem, wobei eine Sprachausgabe aktiviert wird, **dadurch gekennzeichnet, dass** die Sprachausgabe durch eine Benutzereingabe unterbrochen wird, dass mittels der Benutzereingabe die Spracheingabe aktiviert wird und daß nach Abschluss der Spracheingabe erneut die Sprachausgabe aktiviert wird.

2. Verfahren nach Anspruch 1, **dadurch gekennzeichnet, dass** während der Sprachausgabe ein Mikrofon aktiviert wird und dass die Sprachausgabe dann unterbrochen wird, wenn ein gesprochenes Wort erfasst wird.

3. Verfahren nach Anspruch 2, **dadurch gekennzeichnet, dass** die Sprachausgabe nur dann unterbrochen wird, wenn ein vorgebbares Wort erfasst wird.

4. Verfahren nach einem der vorhergehenden Ansprüche, **dadurch gekennzeichnet, daß** die Sprachausgabe durch einen Tastendruck unterbrochen wird.

5. Verfahren nach einem der vorhergehenden Ansprüche, **dadurch gekennzeichnet, daß** die Spracheingabe und -ausgabe durch einen Tastendruck deaktiviert wird.

6. Verfahren nach Anspruch 5, **dadurch gekennzeichnet, daß** eine Deaktivierung der Spracheingabe und -ausgabe erst durchgeführt wird, wenn ein Tastendruck zweimal ausgeführt wird und/oder wenn eine vorgegebene Zeitspanne von einer Dauer des Tastendrucks überschritten wird.

7. Verfahren nach einem der vorhergehenden Ansprüche, **dadurch gekennzeichnet, dass** durch die Sprachausgabe eine Aufforderung zu einer Spracheingabe ausgegeben wird.

8. Verfahren nach einem der vorhergehenden Ansprüche, **dadurch gekennzeichnet, dass** ein von dem Mikrofon erfasstes Signal und ein über Lautsprecher ausgegebenes Signal einer Filtereinheit zugeführt werden und dass das von dem Mikrofon erfasste Signal gefiltert wird.

## Claims

1. Method for controlling voice input and output in a navigation system, wherein voice output is activated, **characterized in that** the voice output is interrupted by a user input, **in that** the user input is used to activate the voice input and **in that** following the conclusion of the voice input the voice output is activated again.

2. Method according to Claim 1, **characterized in that** during the voice output a microphone is activated and **in that** the voice output is interrupted when a spoken word is sensed.

3. Method according to Claim 2, **characterized in that** the voice output is interrupted only when a prescribable word is sensed.

4. Method according to one of the preceding claims, **characterized in that** the voice output is interrupted by the pressing of a key.

5. Method according to one of the preceding claims, **characterized in that** the voice input and output is deactivated by the pressing of a key.

6. Method according to Claim 5, **characterized in that** the voice input and output is deactivated only when a key is pressed twice and/or when a prescribed period of time is exceeded by a length of time for which the key is pressed.

7. Method according to one of the preceding claims, **characterized in that** the voice output outputs a request for voice input.

8. Method according to one of the preceding claims, **characterized in that** a signal sensed by the microphone and a signal that is output via loudspeakers are supplied to a filter unit and **in that** the signal sensed by the microphone is filtered.

## Revendications

1. Procédé de commande d'une entrée vocale et d'une sortie vocale dans un système de navigation, une sortie vocale étant activée, **caractérisé en ce que** la sortie vocale est interrompue par une entrée d'utilisateur, que l'entrée vocale est activée à l'aide de l'entrée d'utilisateur et qu'à la fin de l'entrée vocale, la sortie vocale est à nouveau activée.

2. Procédé selon la revendication 1, **caractérisé en ce qu'**un microphone est activé pendant la sortie vocale et que la sortie vocale est interrompue lorsqu'un mot prononcé est détecté.

3. Procédé selon la revendication 2, **caractérisé en ce que** la sortie vocale n'est interrompue que lorsque ledit mot pouvant être prédéfini est détecté.

4. Procédé selon l'une quelconque des revendications précédentes, **caractérisé en ce que** la sortie vocale est interrompue par une pression de touche.

5. Procédé selon l'une quelconque des revendications précédentes, **caractérisé en ce que** l'entrée vocale et la sortie vocale sont désactivées par une pression de touche.

6. Procédé selon la revendication 5, **caractérisé en ce qu'**une désactivation de l'entrée vocale et de la sortie vocale est réalisée par application d'une double pression de touche et/ou lorsqu'un intervalle de temps prédéfini d'une durée de pression de touche est dépassé.

7. Procédé selon l'une quelconque des revendications précédentes, **caractérisé en ce qu'**une demande d'entrée vocale est émise par la sortie vocale.

8. Procédé selon l'une quelconque des revendications précédentes, **caractérisé en ce qu'**un signal détecté par le microphone et un signal émis via les haut-parleurs sont amenés à une unité de filtrage et que le signal détecté par le microphone est filtré.
